# EUROPÄISCHE PATENTSCHRIFT

(11) **EP 0 476 006 B1**
(45) Veröffentlichungstag und Bekanntmachung des Hinweises auf die Patenterteilung: **08.03.1995**
(21) Anmeldenummer: 90908944.3
(22) Anmeldetag: 05.06.1990
(51) Int. Cl.: G02B 23/00, G02B 5/10

(54) **SPIEGELTELESKOP UND VERFAHREN ZU SEINER HERSTELLUNG**
MIRROR TELESCOPE AND PROCESS FOR MANUFACTURING IT
TELESCOPE A MIROIR ET SON PROCEDE DE FABRICATION

(30) Priorität: 07.06.1989 DE 3918620; 17.07.1989 DE 3923588
(43) Veröffentlichungstag der Anmeldung: 25.03.1992
(73) Patentinhaber: Hügenell, Hermann, D-67245 Lambsheim (DE); Angstenberger, Karl Friedrich, D-67227 Frankenthal (DE)
(72) Erfinder: Hügenell, Hermann, D-6715 Lambsheim (DE)
(74) Vertreter: Bosshard, Ernst
(86) Internationale Anmeldenummer: EP9000889
(87) Internationale Veröffentlichungsnummer: WO9015353

(56) Entgegenhaltungen:
- EP-A- 0 222 689
- WO-A-88/06743
- WO-A-89/04980
- DE-A- 1 303 326
- US-A- 3 502 387
- US-A- 3 507 547
- "dtv-Atlas zur Astronomie", Deutscher Taschenbuch Verlag, München 1977, Seiten 24-25
- "Lunettes et Telescopes", A.Danjon et al., Editions de la Revue d'optique théorique et instrumentale, Paris 1935, Seiten 247-251

## Beschreibung

Die Erfindung betrifft ein Spiegelteleskop mit einem Tubus und mit einem in diesem angeordneten Primärspiegel, wobei der Brennpunkt des Primärspiegels seitlich außerhalb des Tubus liegt, sowie ein Verfahren zur Herstellung eines derartigen Spiegelteleskopes.

Es sind Spiegelteleskope bekannt, bei welchen die optische Achse des Primärspiegels parallel zum Tubus bzw. zur Lichteinfallsrichtung verläuft. Die adaptive Optik mit dem Umlenkspiegel liegt hierbei im Brennpunkt im Bereich des Lichteinfalls, was eine Abschattung zur Folge hat.

Ein gattungsgemäßes Spiegelteleskop stellt der sogenannte Schiefspiegler nach Brachyt dar (s. dtv-Atlas zur Astronomie, München 1977, Seiten 24 bis 25). Bei diesem bekannten Teleskop wirft ein gegen den Strahlengang etwas schräg gestellter Hauptspiegel die Strahlen auf einen Hilfsspiegel, der außerhalb des Haupttubus des Teleskopes liegt. Von dort geht der Lichtstrahl auf den Brennpunkt zu, der neben dem Hauptspiegel zu liegen kommt. Zwischen Brennpunkt und Hilfsspiegel befindet sich oft eine Korrekturlinse. Der Schiefspiegler hat also einen z-förmigen Strahlengang.

Ferner ist nach William Herrschel ein gattungsgemäßes Spiegelteleskop bekannt, das in der Druckschrift "LUNETTES ET TELESCOPES", Danjon et al. Paris 1935, Seiten 247 bis 251 beschrieben wird. Auch bei diesem bekannten Spiegelteleskop liegt der Brennpunkt des Primärspiegels seitlich außerhalb des einfallenden Lichtes. Die Oberfläche des Primärspiegels ist als Teilkreisfläche eines hypothetischen, rotationssymmetrischen Großspiegels ausgeformt, dessen optische Achse neben der Teilkreisfläche und somit neben dem Primärspiegel angeordnet ist. Durch die Neigung des Primärspiegels bezüglich der Lichteinfallsrichtung wird erreicht, daß die adaptive Optik außerhalb des Lichteinfalls angeordnet werden kann. Aufgrund der Spiegelneigung sind jedoch die Lichtwege unterschiedlich, was astigmatische Bildverzeichnungen zur Folge hat. Zur Kompensierung der unterschiedlichen Lichtwege muß deshalb eine Korrekturplatte vorhanden sein.

In der EP-A-0 222 689 wird ein Spiegelteleskop mit einem Primärspiegel beschrieben, der aus einzelnen, jeweils eine Teilkreisfläche einnehmenden, gemeinsam geschliffenen Spiegelsegmenten zusammengesetzt ist.

Der Erfindung liegt die Aufgabe zugrunde, ein Spiegelteleskop der eingangs genannten Art anzugeben, bei welchem der wirksame Strahlungs-Einfallsbereich von optischen Funktionselementen, wie beispielsweise dem Umlenkspiegel mit Halterung und ähnlichem, freigehalten wird und der Brennpunkt trotzdem soweit eindeutig festgelegt ist, daß keine Korrekturoptik notwendig ist.

Diese Aufgabe wird bei einem Spiegelteleskop der eingangs genannten Art dadurch gelöst, daß die Oberfläche des Primärspiegels als kreisförmige Teilfläche eines hypothetischen, asphärischen und rotationssymmetrischen Großspiegels ausgeformt ist, dessen optische Achse neben der kreisförmigen Teilfläche und somit neben dem Primärspiegel angeordnet ist und parallel zum Tubus verläuft, wobei die Oberfläche des Primärspiegels aus einer Anzahl von Spiegelsegmenten zusammengesetzt ist.

Die Erfindung geht somit von der Überlegung aus, daß ein hypothetischer, rotationssymmetrischer Großspiegel, der wegen seiner Abmessungen, insbesondere aus fertigungs- und bautechnischen Gründen, nicht realisierbar ist, einen in der optischen Achse liegenden Brennpunkt aufweist, der von astigmatischen Verzeichnungen oder ähnlichem frei ist. Dieser Brennpunkt ist aber nicht nur für die gesamte Großspiegelfläche, sondern auch für alle Teilflächen maßgebend. Beschränkt man sich daher auf eine wegen der Größenverhältnisse realisierbare, zur optischen Achse versetzte Teilfläche des Großspiegels, so liegt der zugehörige Brennpunkt voraussetzungsgemäß außerhalb des Lichteinfalltubus, ohne daß damit optische Nachteile verbunden sind.

So weist beispielsweise eine kreisförmige erfindungsgemäße, neben der optischen Achse liegende Teilfläche dieselbe Intensitätsverteilung der einfallenden Strahlungsenergie im Brennpunkt auf, wie ein rotationssymmetrisch auspolierter, kreisförmiger Spiegelkörper gleichen Durchmessers, dessen Brennweite derjenigen der erfindungsgemäßen Teilfläche entspricht. Das heißt, für ein einfallendes Strahlenbündel ist es vollkommen gleichgültig, ob es auf einen rotationssymmetrisch auspolierten Primärspiegel trifft, dessen optische Achse mit seiner Rotations-Symmetrieachse identisch ist, oder auf eine neben der optischen Achse liegende Teilfläche, deren beugende Öffnung in Licht-Strahlungs-Einfallrichtung betrachtet, mit jener Beugungsöffnung des rotationssymmetrisch auspolierten Spiegelkörpers identisch ist: Von Bedeutung ist allein die Länge des Lichtweges zum Brennpunkt, um dort phasengleich aufzutreffen. Diese Bedingung ist mit der erfindungsgemäßen Teilfläche erfüllt. Sie ist ein Flächenausschnitt des eingangs genannten Großspiegels und bildet daher völlig verzerrungsfrei ab.

Die Erfindung hat den Vorteil, daß hinsichtlich der adaptiven Optik und der zugehörigen Funktionselemente keine konstruktiven Beschränkungen vorhanden sind, weil sie außerhalb des Licht-/Strahlungseinfallsbereichs liegen und somit weder abschatten noch ins Reflexionsfeld hineinragen.

Da außerdem auch der Focus des Primärspiegels freigehalten bzw. unbeschränkt wirksam ist, wird eine völlig verlustfreie Lichtkonzentration im Focus des Primärspiegels ermöglicht.

Da die Spiegeloberfläche aus einer Anzahl von Spiegelsegmenten zusammengesetzt ist, lassen sich nicht nur im Durchmesser größere Primärspiegel herstellen, sondern es können auch besonders kurze Brennweiten erreicht werden, weil die hierbei erforderliche konkave Wölbung der einzelnen Segmente relativ flach gehalten werden kann. Mit der kurzen Brennweite kann auch die Tubuslänge verkürzt werden.

Insgesamt kann durch diese Verkleinerung die Infrastruktur des Spiegelteleskopes ökonomischer ausgeführt werden, beispielsweise kann der zum Schutz gegen Witterung und äußere Einflüsse erforderliche Schutzdom kleiner gebaut werden.

Es ist besonders vorteilhaft, daß im Aufnahmebereich des Focus des Primärspiegels ein Sekundär-Umlenkspiegel vorhanden ist, welcher quer zur optischen Achse des Primärspiegels verfahrbar ist. Das hat den Vorteil, daß ohne länger andauernde Unterbrechung des Teleskopbetriebes eine Umstellung von einem Beobachtungsmodus in den anderen möglich ist, wobei der Sekundär-Umlenkspiegel unmittelbar und rechnerkontrolliert in den Strahlengang gefahren werden kann, um den jeweils gewünschten Focus zu ermöglichen.

Des weiteren ist es vorteilhaft, daß ein innerhalb des Strahlengangs des ersten Sekundär-Umlenkspiegels parallel zur optischen Achse verfahrbarer zweiter Umlenkspiegel vorhanden ist, mit welchem verschiedene Foci für den Teleskopbetrieb eingestellt werden können. Auf diese Weise können sehr kurze Umstellungen zwischen den Focus-Bereichen durchgeführt werden, die wiederum automatisch und rechnerkontrolliert ablaufen können.

Die für die Umstellungen erforderlichen mechanischen Vorrichtungen können ebenso wie die optischen Sekundäreinrichtungen und die jeweils zugehörigen Steuereinrichtungen hinsichtlich ihrer Lagerung, Ansteuerung usw. besonders einfach dadurch ausgebildet werden, daß alle Beobachtungspunkte, die vom Brennpunkt aus angesteuert werden können, in einer einzigen, durch die optische Achse und den Mittelpunkt des Primärspiegels verlaufenden Ebene angeordnet sind. Da hat den Vorteil, daß die Strahlführung und die Nachführung der Beobachtungspunkte mit besonders einfachen Mitteln erfolgen kann, insbesondere auch dann, wenn das Spiegelteleskop um seine horizontale Aufhängungsachse gedreht wird.

Verfahrensmäßig wird die Aufgabe mit einem Herstellungsverfahren gemäß Anspruch 5 gelöst. Gemäß dem erfindungsgemäßen Verfahren werden zunächst einzelne Spiegelsegment-Rohlinge mit einer Oberfläche dergestalt vorgeformt, daß sich bei lückenlosem Zusammenfügen aller Spiegelsegment-Rohlinge zu einer Primärspiegelvorform die Oberflächen zunächst insgesamt zu einer Kugelkappe ergänzen, deren Krümmung sich optimal an die asphärische Endform des Primärspiegels annähert. Anschließend werden die Oberflächen der einzelnen Spiegelsegment-Rohlinge zur Erzeugung der Endoberfläche nachgearbeitet. Schließlich werden die Spiegelsegmente zu einem Primärspiegel in einem Tubus zusammengefügt, so daß ein Spiegelteleskop entsteht, in dem der Brennpunkt des Primärspiegels außerhalb des Tubus liegt, und in dem die Oberfläche des Primärspiegels als kreisförmige Teilfläche eines hypothetischen, rotationssymmetrischen Großspiegels ausgeformt ist, dessen optische Achse neben der kreisförmigen Teilfläche und somit neben dem Primärspiegel angeordnet ist und parallel zum Tubus verläuft.

Ein derartiges Verfahren hat den Vorteil, daß der erfindungsgemäße Primärspiegel mit geringem Aufwand beispielsweise in Waben-Leicht-Struktur, vornehmlich aus Quartz, hergestellt werden kann. Mit diesem Vorfertigungsprozeß, der jedes einzelne Spiegelsegment betrifft, werden die Herstellungskosten beim Polieren sehr niedrig gehalten.

Vorteilhaft unterscheidet sich die Kugelkrümmung bei einem Primärspiegeldurchmesser von etwa 5 bis 8 Metern mit etwa 1 Millimeter Abweichung von der asphärischen Endform. Somit brauchen lediglich Millimeterbruchteile in der Nacharbeitungsphase auspoliert werden.

Nachfolgend wird die Erfindung anhand eines in der Zeichnung dargestellten Ausführungsbeispieles weiter beschrieben.
- Fig. 1: zeigt schematisch eine Draufsicht auf einen rotationssymmetrischen, hypothetischen Großspiegel mit einer als Primärspiegel eines Spiegelteleskopes dienenden Teilkreisfläche;
- Fig. 2: zeigt schematischen einen Vertikalquerschnitt durch ein Spiegelteleskop;
- Fig. 3: zeigt in einem Vertikalquerschnitt schematisch weitere Einzelheiten des Spiegelteleskopes gemäß Fig. 2
- Fig. 4: zeigt schematisch einen vertikalquerschnitt durch eine Primärspiegelvorform und
- Fig. 5: zeigt schematisch einen Vertikalquerschnitt durch einen Spiegelsegment-Rohling und einen zugehörigen Vorformkörper.

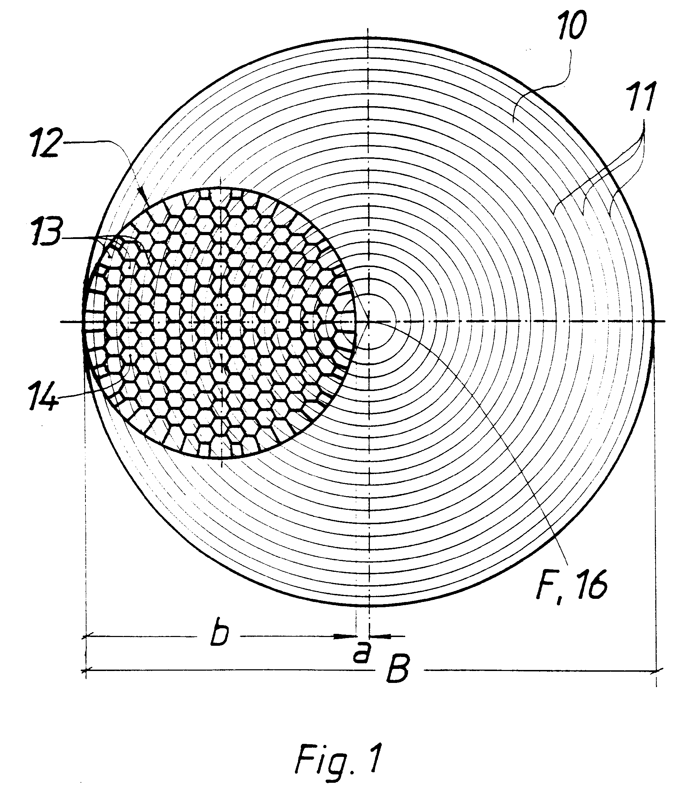

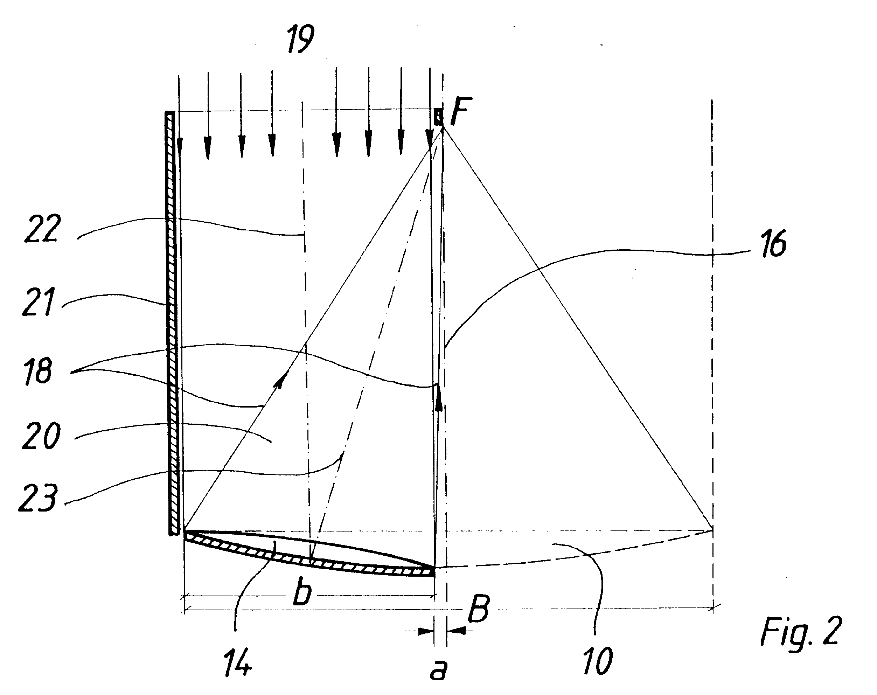

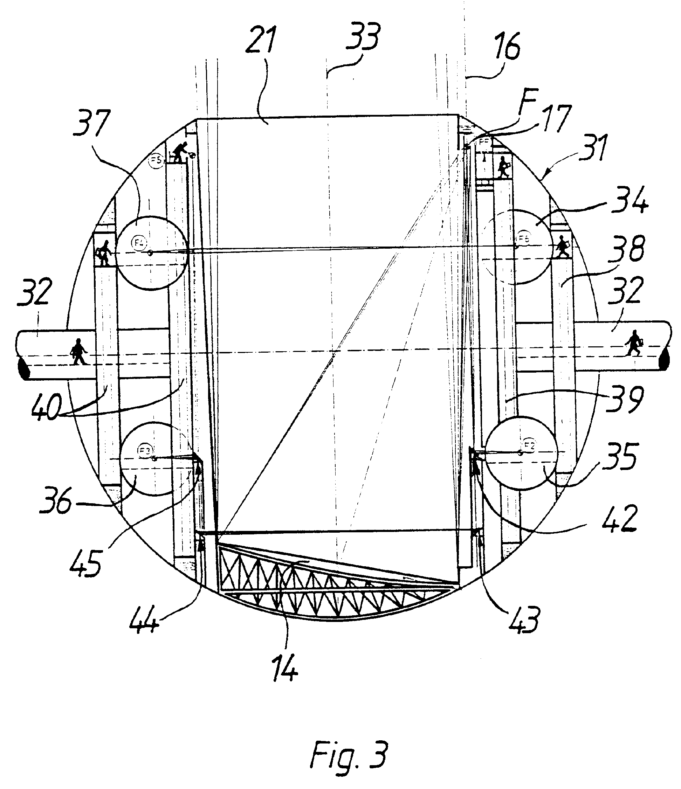

In der Fig. 1 ist mit 10 ein hypothetischer, d.h. grundsätzlich in dieser Größenordnung nicht realisierbarer Großspiegel 10 bezeichnet, der einen Durchmesser B aufweist. Der Großspiegel 10 ist asphärisch und rotationssymmetrisch ausgebildet, was durch die konzentrischen Kreise 11 veranschaulicht ist. Der hypothetische Großspiegel 10 dient dazu, die geometrischen Größen einer Teilkreisfläche 12 mit dem Durchmesser b festzulegen. Der Durchmesser b der Teilkreisfläche 12 entspricht im wesentlichen dem Primärspiegel-Durchmesser von herkömmlichen Spiegelteleskopen. In dem dargestellten Beispiel ist die Teilkreisfläche 12 mittels wabenförmigen Spiegelsegmenten 13 zu einem Primärspiegel 14 eines in den Fig. 2 und 3 weiter beschriebenen Spiegelteleskops 15 zusammengesetzt. Wie die Fig. 1 veranschaulicht, ist der Brennpunkt F der hypothetischen Großspiegels 10 voraussetzungsgemäß auch der Brennpunkt der Teilkreisfläche 12 bzw. des Primärspiegels 14. Folglich sind die Spiegelsegmente 13 bezüglich ihrer optischen Eigenschaften nicht rotationssymmetrisch zur Teilkreisfläche 12 ausgebildet, sondern zur Bündelung auf den Brennpunkt F rotationssymmetrisch zum Großspiegel 10.

Die durch den Brennpunkt F verlaufende optische Achse 16 ist somit gleichzeitig die optische Achse des Großspiegels 10 und der Teilkreisfläche 12 bzw. des Primärspiegels 14. Der Brennpunkt F liegt in einem vorgegebenen Abstand a außerhalb der Teilkreisfläche 12 oder anders ausgedrückt, der Brennpunkt F liegt in der Projektion senkrecht zur Zeichenebene außerhalb der Teilkreisfläche 12 bzw. des Primärspiegels. Der Abstand a ist hierbei so gewählt, daß die im Brennpunkt F anzuordnende adaptive Optik 17 (Fig. 3) und weitere zur Umlenkung der vom Primärspiegel 14 reflektierten Strahlen 18 (Fig. 2) erforderlichen Funktionselemente außerhalb der Teilkreisfläche 12 angeordnet sind, so daß keine Abschattung der senkrecht zur Zeichenebene verlaufenden Lichteinfallsstrahlen 19 (Fig. 2) erfolgt und ferner auch das Reflexsionsfeld 20 (Fig. 2,3) freigehalten wird.

In der Querschnittsdarstellung gemäß Fig. 2 ist der Primärspiegel 14 bzw. die Teilkreisfläche 12 in einem Tubus 21 in durchgehender Strichführung dargestellt. Aus Gründen des leichteren Verständnisses ist ferner der übrige Teil des hypothetischen Großspiegels 10 gestrichelt wiedergegeben. Der Tubus 21 verläuft parallel zur optischen Achse 16 und der Lichteinfallstrahlen 19. Ein zentrischer, einfallender Lichtstrahl ist mit 22 und der zugehörige Reflexionsstrahl mit 23 bezeichnet.

Das Spiegelteleskop 30 gemäß Fig. 3 besteht aus einem Kugelgehäuse 31, das über zwei rohrförmige, begehbare, vertikale Achsen 32 in einem nicht näher dargestellten, beispielsweise in der DE-C-37 07 642 beschriebenen Traggestell drehbar gelagert ist. Über das Traggestell kann das Kugelgehäuse 31 sowohl um die Achsen 32 als auch mit den Achsen 32 um eine vertikale Achse 33 geschwenkt werden. Diese ist zugleich die Längsachse des Tubus 21, der in das Kugelgehäuse 10 fest eingebaut ist. Am Boden des Tubus 21 ist der Primärspiegel 14 gemäß Fig. 2 gelagert. Innerhalb des Kugelgehäuses 10 sind mehrere Beobachtungskabinen 34, 35,36,37, angeordnet. Alle Beobachtungskabinen 34 bis 37 sind in einer durch die optische Achse 16 und den Mittelpunkt des Primärspiegels 14 gehenden Ebene (Zeichenebene) angeordnet.

Zwischen den als Zugang dienenden röhrenförmigen Achsen 32 und den Beobachtungskabinen 34 bis 37 befinden sich vertikal verlaufende Liftanlagen 38,39,40, die parallel zur optischen Achse 16 verlaufen.

Im Bereich des Brennpunktes F ist ein erster Konvex-Sekundär-Umlenkspiegel verfahrbar angeordnet, über welchen die Brennweite des Primärspiegels 14 veränderbar ist. Der erste Sekundärumlenkspiegel reflektiert die auf den Brennpunkt F gebündelten Strahlen wahlweise auf zweite Konvex-Sekundär-Umlenkspiegel 42,43,44,45, die parallel zur optischen Achse 16 und in der Ebene der Beobachtungskabinen 34 bis 37 verfahrbar angeordnet sind.

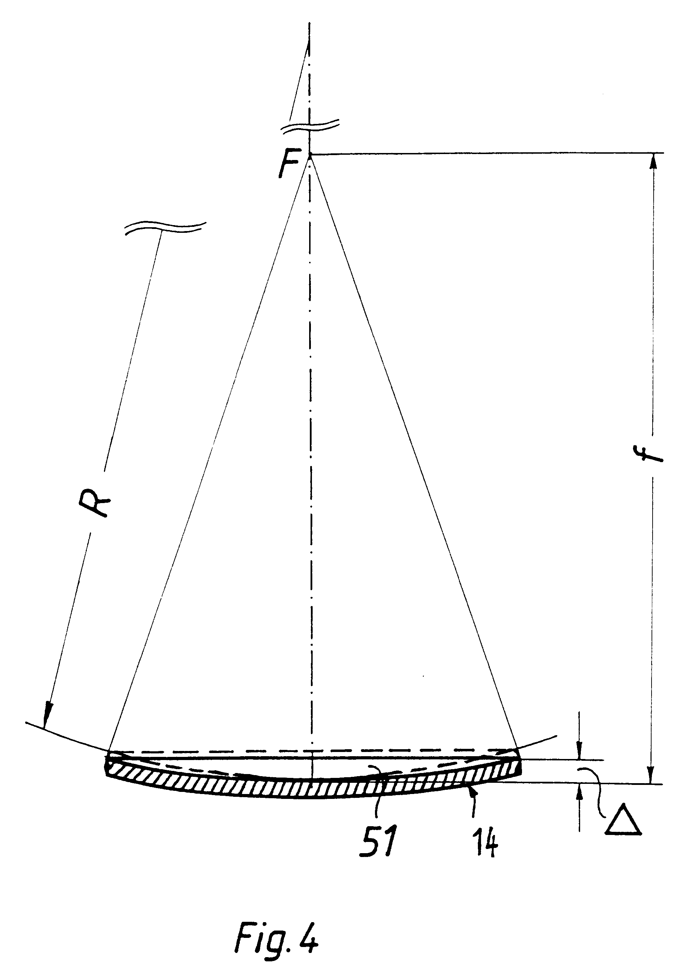

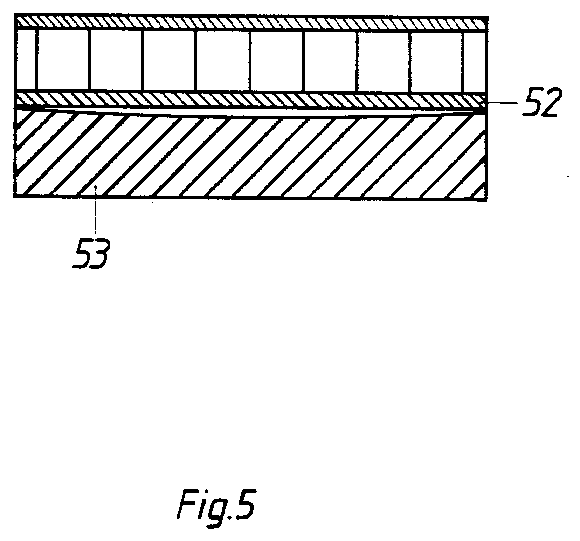

Die Fig. 4 veranschaulicht gestrichelt im Querschnitt eine sphärisch gekrümmte primärspiegelvorform, welche in WabenLeicht-Struktur aus einzelnen Spiegelsegment-Rohlingen 52 (Fig. 5) zu einer Kugelkappe 51 zusammengesetzt ist. Der Radius der auf diese Weise gebildeten Kugelkappe 51 ist R = 2f, wobei f den Scheitelkreisradius des in den vorhergehenden Figuren beschriebenen Primärspiegels 14 bezeichnet. Die konkave Fläche der Kugelkappe 51 unterscheidet sich mit geringstmöglichen Toleranzen von der asphärischen Oberfläche des Primärspiegels 14, so daß lediglich eine geringe Auspolierung erforderlich ist.

In Fig. 5 ist mit 53 ein Vorformkörper mit asphärisch gekrümmter Oberfläche bezeichnet, der dazu dient, einen Spiegelsegment-Rohling 52 herzustellen. Dieser kann beispielsweise aus Quarz oder anderen äquivalenten, vorformbaren Stoffen bestehen. Die Verformung erfolgt unter Hitze, Druck oder ähnlichem. Durch Aneinandersetzung einer Vielzahl derartiger Spiegelsegment-Rohlinge 52 erhält man die in Fig. 4 dargestellte Primärspiegelvorform in Form einer Kugelkappe 51.

## Patentansprüche

1. Spiegelteleskop mit einem Tubus (21) und mit einem in diesem angeordneten Primärspiegel (14), wobei der Brennpunkt (F) des Primärspiegels (14) seitlich außerhalb des Tubus (21) liegt, dadurch gekennzeichnet,
daß die Oberfläche des Primärspiegels (14) als kreisförmige Teilfläche (12) eines hypothetischen, asphärischen und rotationssymmetrischen Großspiegels (10) ausgeformt ist, dessen optische Achse (16) neben der kreisförmigen Teilfläche (12) und somit neben dem Primärspiegel (14) angeordnet ist und parallel zum Tubus (12) verläuft, wobei die Oberfläche des Primärspiegels (14) aus einer Anzahl von Spiegelsegmenten (13) zusammengesetzt ist.

2. Spiegelteleskop nach Anspruch 1,
dadurch gekennzeichnet,
daß im Aufnahmebereich des Brennpunktes (F) des Primärspiegels (14) ein erster Sekundär-Umlenkspiegel vorhanden ist, welcher quer zur optischen Achse (16) des hypothetischen Großspiegels (10) verfahrbar ist.

3. Spiegelteleskop nach Anspruch 2,
dadurch gekennzeichnet,
daß mindestens ein innerhalb des Strahlengangs des ersten Sekundär-Umlenkspiegels parallel zur genannten optischen Achse (16) verfahrbarer zweiter Sekundär-Umlenkspiegel (42, 43, 44, 45) vorhanden ist, mit welchem verschiedene Foci für den Teleskopbetrieb eingestellt werden können.

4. Spiegelteleskop nach einem der vorhergehenden Ansprüche,
dadurch gekennzeichnet,
daß alle Beobachtungspunkte (34,35,36,37), die vom Brennpunkt (F) aus ansteuerbar sind, in einer einzigen, durch die optische Achse (16) und den Mittelpunkt des Primärspiegels (14) verlaufenden Ebene angeordnet sind.

5. Verfahren zur Herstellung eines Spiegelteleskopes gemäß Anspruch 1, welches aus Spiegelsegmenten zusammengesetzt ist, gekennzeichnet durch folgende Verfahrensschritte:
a) Vorformen von einzelnen Spiegelsegment-Rohlingen (52) mit einer Oberfläche jeweils dergestalt, daß sich bei lückenlosem Zusammenfügen aller Spiegelsegment-Rohlinge (52) zu einer Primärspiegelvorform (50) die Oberflächen zunächst insgesamt zu einer Kugelkappe (51) ergänzen, deren Krümmung sich optimal an die asphärische Endform des Primärspiegels annähert,
b) Nacharbeiten der Oberflächen der einzelnen Spiegelsegment-Rohlinge (52) zur Erzeugung der Endoberfläche, und
c) Zusammenfügen der Spiegelsegmente zu einem Primärspiegel in einem Tubus, so daß ein Spiegelteleskop entsteht, in dem der Brennpunkt des Primärspiegels außerhalb des Tubus liegt, und in dem die Oberfläche des Primärspiegels (14) als kreisförmige Teilfläche (12) eines hypothetischen, rotationssymmetrischen Großspiegels (10) ausgeformt ist, dessen optische Achse (16) neben der kreisförmigen Teilfläche (12) und somit neben dem Primärspiegel (14) angeordnet ist und parallel zum Tubus (21) verläuft.

6. Verfahren nach Anspruch 5,
dadurch gekennzeichnet,
daß sich die Kugelkrümmung bei einem Primärspiegeldurchmesser von etwa 5 bis 8 m mit etwa 1 mm Abweichung von der asphärischen Endform unterscheidet.

## Claims

1. Reflecting telescope with a tube (21) and with a primary mirror (14) located therein, the focal point (F) of the primary mirror (14) being outside the tube (21), characterized in that the surface of the primary mirror (14) is in the form of a pitch circular surface (12) of a hypothetical, aspherical and rotationally symmetrical large mirror (10), whose optical axis (16) is located alongside the pitch circular surface (12) and therefore alongside the primary mirror (14) and is parallel to the tube (12), wherein the surface of the primary mirror (14) is constituted by a plurality of mirror segments (13).

2. Reflecting telescope according to claim 1, characterized in that a first secondary reflecting mirror is provided in the reception area of the focal point (F) of the primary mirror (14) and is movable at right angles to the optical axis (16) of said large mirror (10).

3. Reflecting telescope according to claim 2, characterized in that there is at least one second secondary reflecting mirror (42, 43, 44, 45) movable parallel to the optical axis (16) within the optical path of the first secondary reflecting mirror and enables different foci for the telescope operation to be set.

4. Reflecting telescope according to one of the preceding claims, characterized in that all the observation points (34, 35, 36, 37) which can be controlled from the focal point (F) are located in a single plane passing through the optical axis (16) and the centre of the primary mirror (14).

5. Process for producing a reflecting telescope according to claim 1, which is formed from mirror segments, characterized by the following process steps:
a) preshaping individual mirror segment blanks (52) with a surface, in such a way that on continuous joining together of all the mirror segment blanks (52) to form a primary mirror blank (50), the surfaces are initially summated to form a spherical cap (51), whose curvature approaches in optimum manner the aspherical final shape of the primary mirror and
b) reworking the surfaces of the individual mirror segment blanks (52) for producing the final surface,
c) continuous joining together of the mirror segments to a primary mirror (14) in a tube, so that there is formed a reflecting telescope, in which the focal point of the primary mirror being outside the tube, and in which the surface of the primary mirror (14) is in the form of a pitch circular surface (12) of a hypothetical, rotationally symmetrical large mirror (10), whose optical axis (16) is located alongside the pitch circular surface (12) and therefore alongside the primary mirror (14) and is parallel to the tube (21).

6. Process according to claim 5, characterized in that the spherical curvature differs by approximately 1 mm from the aspherical final shape in the case of a primary mirror diameter of approximately 5 to 8 m.

## Revendications

1. Télescope à miroirs comportant un tube (21) contenant un miroir primaire (14) dont le foyer (F) du miroir primaire (14) est situé en dehors du tube, latéralement, caractérisé en ce que la surface du miroir primaire (14) a la forme d'une surface semi-circulaire (12) d'un grand miroir (10) imaginaire, asphérique et de révolution, dont l'axe optique (16) est disposé à côté de la surface semi-circulaire (12) et donc du miroir primaire (14) et s'étend parallèlement au tube (12) tandis que la surface du miroir primaire (14) est constituée par une pluralité d'éléments de miroir (13).

2. Télescope à miroirs selon la revendication 1, caractérisé en ce que dans la zone de foyer (F) du miroir primaire (14) est monté un miroir secondaire de déviation, pouvant se déplacer transversalement par rapport à l'axe optique (16) du grand miroir imaginaire (10).

3. Télescope à miroirs selon la revendication 2, caractérisé en ce qu'il comporte au moins un deuxième miroir de déviation secondaire (42, 43, 44, 45) susceptible de se déplacer à l'intérieur du parcours des rayons du premier miroir secondaire de déviation parallèlement par rapport à l'axe optique (16) indiqué, permettant pour la marche du télescope de se régler sur diverses focales.

4. Télescope à miroirs selon l'une des revendications précédentes, caractérisé en ce que tous les postes d'observation (34, 35, 36, 37), qui peuvent être utilisés en fonction de la position du foyer (F), sont disposés dans un plan défini par l'axe optique (16) et le'foyer du miroir primaire (14).

5. Procédé de fabrication d'un télescope selon la revendication 1, constitué d'un assemblage d'éléments de miroir, caractérisé par les étapes de fabrication suivantes :
a) préformage d'ébauches séparés d'éléments de miroir (52) pour leur donner une surface telle qu'en assemblant jointivement toutes les ébauches (52) d'éléments de miroir de manière à réaliser une préforme (50) du miroir primaire, l'ensemble des surfaces des ébauches forme une calotte (21) en forme de sphère dont la courbure s'approche le plus possible de celle correspondant à la forme asphérique définitive du miroir primaire,
b) retouche des surfaces des ébauches séparées des éléments de miroir (52), pour obtenir les surfaces définitives,
c) assemblage des éléments de miroir en un miroir primaire dans un tube, de manière à réaliser un télescope à miroirs dont le miroir primaire (14) a son foyer situé en dehors du tube tandis que sa surface a la forme d'une surface semi-circulaire (12) d'un grand miroir (10) imaginaire, asphérique et de révolution, dont l'axe optique (16) est parallèle au tube (21) et passe à côté de la surface semi-circulaire (12) et donc du miroir primaire (14).

6. Procédé selon la revendication 5, caractérisé en ce que la courbure de la surface, pour un diamètre du miroir primaire de 5 à 8 m environ, présente un écart de 1 mm environ par rapport à la forme asphérique finale.
